# EUROPÄISCHE PATENTANMELDUNG

(11) **EP 2 878 434 A1**
(43) Veröffentlichungstag der Anmeldung: **03.06.2015**
(21) Anmeldenummer: 14194690.5
(22) Anmeldetag: 25.11.2014
(51) Int. Cl.: B29C 70/74, B29C 67/00, B33Y 80/00, B33Y 10/00

(54) **Verbundanordnung und Herstellverfahren hierfür**

(30) Priorität: 02.12.2013 DE 102013020368
(71) Anmelder: B & S OHG, 33100 Paderborn (DE)
(72) Erfinder: Schulz, Sven, 53123 Bonn (DE)
(74) Vertreter: Wickord, Wiro

(57) **Zusammenfassung**

Verbundanordnung umfassend einen werkzeuglos im Wege des Rapid Prototyping hergestellten Grundkörper (1) als formgebende Komponente der Verbundanordnung mit wenigstens einer Längsausnehmung (2), welche über wenigstens zwei und bevorzugt drei oder mehr Zugangsöffnungen verfügt, umfassend eine Vielzahl von langgestreckt ausgebildeten Stabilisierungsfasern (3), welche in der Längsausnehmung des Grundkörpers vorgesehen sind und eine höhere Zugfestigkeit aufweisen als der Kunststoffwerkstoff des Grundkörpers, und umfassend einen Füllwerkstoff, (4) welcher wie die Stabilisierungsfasern in der Längsausnehmung des formgebenden Grundkörpers vorgesehen ist und zur dauerhaften Festlegung der Stabilisierungsfasern in der Längsausnehmung mit dem Grundkörper einerseits und den Stabilisierungsfasern andererseits verbunden ist.

## Beschreibung

Die Erfindung betrifft eine Verbundanordnung mit einem formgebenden Grundkörper, welcher durch Stabilisierungsfasern verstärkt und im Hinblick auf seine Widerstandsfähigkeit optimiert ist. Ferner betrifft die Erfindung ein Herstellverfahren für die Verbundanordnung.

Eine gattungsgemäße Verbundanordnung wird heute konventionell hergestellt, indem der Grundkörper in einem Urformverfahren, beispielsweise mittels Kunststoffspritzgießens, hergestellt wird. Typischerweise werden hierbei bereits während der Herstellung des Grundkörpers die Stabilisierungsfasern vergossen. Es entsteht somit die Verbundanordnung in einem einstufigen Herstellverfahren. Für die Herstellung sind dabei Formen beziehungsweise Werkzeuge erforderlich. Aufgrund der Werkzeugkosten lohnt die Herstellung derselben für Einzelstücke und in Kleinserien gefertigte Verbundanordnungen regelmäßig nicht. Zudem schränkt die urformende Herstellung die Formgebung der Verbundanordnung enorm ein, da das Werkzeug nach dem Aushärten von der Verbundanordnung getrennt werden muss. Zudem ist die Herstellung von Verbundanordnungen mit einer komplexen Geometrie, beispielsweise mit Durchgangsbohrungen, Gewindeeinsätzen etc., aufwendig und damit wirtschaftlich nachteilig.

Aufgabe der vorliegenden Erfindung ist es insofern, eine Verbundanordnung anzugeben, welche in kleinen Stückzahlen oder als Einzelteil kostengünstig gefertigt werden kann und große Freiheiten bietet in Bezug auf die Geometrie und Formgebung. Ferner ist es Aufgabe der Erfindung, ein Herstellverfahren für die Verbundanordnung anzugeben.

Zur Lösung der Aufgabe umfasst eine erfindungsgemäße Verbundanordnung einen aus einem Kunststoffwerkstoff formlos im Wege des Rapid Prototyping hergestellten Grundkörper als formgebende Komponente der Verbundanordnung mit wenigstens einer Längsausnehmung, welche über wenigstens zwei und bevorzugt drei oder mehr Zugangsöffnungen verfügt, sowie eine Vielzahl von langgestreckt ausgebildeten Stabilisierungsfasern, welche in der Längsausnehmung des Grundkörpers vorgesehen sind und eine höhere Festigkeit aufweisen als der Kunststoffwerkstoff des Grundkörpers, und einen Füllwerkstoff, welcher wie die Stabilisierungsfasern in der Längsausnehmung des formgebenden Grundkörpers vorgesehen ist und zur dauerhaften Festlegung der Stabilisierungsfasern in der Längsausnehmung mit dem Grundkörper einerseits und den Stabilisierungsfasern andererseits verbunden ist.

Der besondere Vorteil der Erfindung besteht darin, dass der Grundkörper als formgebende Komponente der Verbundanordnung werkzeuglos im Zuge des Rapid Prototypings gefertigt wird und demzufolge eine nahezu beliebige Geometrie aufweisen kann. Insbesondere können an dem formgebenden Grundkörper komplexe geometrische Strukturen, Gewindeabschnitte, Hinterschnitte und Ausnehmungen vorgesehen sein, welche bei konventionellen, mit Werkzeug arbeitenden Urformverfahren nicht hergestellt werden können. Da der Kunststoffwerkstoff des Grundkörpers in der Regel eine geringe Festigkeit aufweist, wird an dem Grundkörper eine Längsausnehmung vorgesehen. Die Längsausnehmung nimmt Stabilisierungsfasern auf, die eine höhere Festigkeit besitzen als der Kunststoffwerkstoff des Grundkörpers. Die Stabilisierungsfasern übernehmen insofern eine stützende beziehungsweise stabilisierende Funktion, welche der mitunter spröde Kunststoffwerkstoff des Grundkörpers nicht übernehmen kann. Zur dauerhaften Verbindung der Stabilisierungsfasern mit dem Grundkörper zur Herstellung des Verbunds werden Teile der Längsausnehmung, welche nicht mit den Stabilisierungsfasern gefüllt sind, mit dem Füllwerkstoff vergossen. Der Füllwerkstoff hat insofern die Aufgabe, die Stabilisierungsfasern und den Grundkörper zu einer funktionalen Einheit zu verbinden.

Beispielsweise wird als Füllwerkstoff ein Thermoplast oder ein Duroplast verwendet. Bevorzugt ist der Füllwerkstoff in einem ausgehärteten Zustand formstabil, widerstandsfähig beziehungsweise zäh.

Nach einer Weiterbildung der Erfindung sind in der Längsausnehmung eine Mehrzahl von Zugangsöffnungen vorgesehen. Beispielsweise sind Zugangsöffnungen zum Einbringen der Fasern, weitere Zugangsöffnungen zum Einbringen des Füllwerkstoffs und andere Zugangsöffnungen zum Herstellen eines Vakuums oder eines Überdrucks in der Längsausnehmung vorgesehen. Mehrere Zugangsöffnungen können an der Längsausnehmung endseitig oder in Längsrichtung der Längsausnehmung verteilt vorgesehen sein.

Nach einer Weiterbildung der Erfindung ist der Grundkörper beanspruchungsgerecht gestaltet. Hierzu ist die Längsausnehmung mit den Stabilisierungsfasern und dem Füllwerkstoff in einem Bereich einer maximalen Scher-, Zug- beziehungsweise Biegebelastung vorgesehen. Die beanspruchungsgerechte Gestaltung des Grundkörpers dient zum einen dazu, eine Schädigung der Verbundanordnung insbesondere in den Bereichen maximaler Belastung zu vermeiden. Zum anderen können durch die beanspruchungsgerechte Gestaltung das Volumen und das Gewicht des Grundkörpers und der Stabilisierungsfasern minimal gewählt werden. Es sinken hierdurch der Herstellaufwand und die Kosten der Verbundanordnung.

Erfindungsgemäß wird die Verbundanordnung durch ein Herstellverfahren geschaffen, welches die folgenden Verfahrensschritte umfasst:
- additives beziehungsweise schichtweises Herstellen des formgebenden Grundkörpers mit der wenigstens einen hierin vorgesehenen Längsausnehmung und der Mehrzahl an Zugangsöffnungen in einem Schichtaufbauverfahren zu einem fluidischen und/oder granularen Grundwerkstoff, indem lokal Energie zugeführt wird und der fluidische und/oder granuläre Grundwerkstoff aushärtet;
- Entfernen von nicht verfestigtem Grundwerkstoff aus der Längsausnehmung des Grundkörpers, wobei der nicht verfestigte Grundwerkstoff durch wenigstens eine Zugangsöffnung entnommen wird;
- Einbringen der Stabilisierungsfasern in die Längsausnehmung, wobei die Stabilisierungsfasern durch die Zugangsöffnung eingeführt werden;
- Positionieren der Stabilisierungsfasern in der Längsausnehmung;
- Herstellen eines Unterdrucks in der Längsausnehmung;
- wenigstens teilweises Verfüllen eines Restvolumens der Längsausnehmung mit dem Füllwerkstoff;
- Verfestigung des Füllwerkstoffs.

Der besondere Vorteil des erfindungsgemäßen Verfahrens besteht darin, dass mit dem Schichtaufbauverfahren die Geometrie des formgebenden Grundkörpers sequentiell geschaffen und nahezu beliebig gewählt werden kann und dass insbesondere innenliegende Längsausnehmungen herstellbar sind, welche geschwungen beziehungsweise gebogen oder abgewinkelt ausgebildet sein können. Die zur Aufnahme der Stabilisierungsfasern vorgesehenen Längsausnehmungen können demzufolge sehr individuell in den Bereichen maximaler Belastung hergestellt werden. Dies ist bei klassischen urformenden Herstellverfahren, welche sich eines Werkzeugs beziehungsweise einer Form bedienen, nicht oder nur sehr eingeschränkt möglich. Beispielsweise wird der Grundkörper unmittelbar von einem Computermodell und einem hieraus abgeleiteten Datensatz hergestellt, ohne dass vorab Geometrieprototypen oder Volumenmodelle gefertigt werden. Eine Topologieoptimierung - beispielsweise in Form einer belastungsgerechten Formgebung des Grundkörpers beziehungsweise der Verbundanordnung - kann dann kostengünstig und zeitsparend an 3D-CAD-Modell erfolgen.

Um nach dem Einbringen der Stabilisierungsfasern in die Längsausnehmung des Grundkörpers eine ausreichende Menge an Füllwerkstoff einfach einfüllen zu können, wird erfindungsgemäß eine Druckdifferenz zwischen den Umgebungsdruck (atmosphärischer Druck) und dem Druck in der Längsausnehmung geschaffen. Beispielsweise wird in der Längsausnehmung ein Unterdruck beziehungsweise ein Überdruck hergestellt. Infolge der Druckdifferenz gelangt der Füllwerkstoff weitgehend selbsttätig in die Längsausnehmung und füllt das Restvolumen jedenfalls teilweise aus. Durch die Prozessparameter, die Wahl des Füllwerkstoffs selbst und seiner Fließeigenschaften im Speziellen können insbesondere der Füllgrad variiert und die Dichte des Verbunds gezielt eingestellt werden. Es kann insofern sichergestellt werden, dass die funktionsnotwendige Verbindung der Stabilisierungsfasern mit dem Grundkörper erreicht ist und die Verbundanordnung die geforderte Festigkeit und Stabilität aufweist. Die Herstellung der Druckdifferenz reduziert hierbei die Prozessdauer. Zudem kann durch das Vorsehen der Druckdifferenz in der Längsausnehmung während der Herstellung des Verbunds das Restvolumen, welches weder durch die Stabilisierungsfasern noch durch den Füllwerkstoff gefüllt ist, sehr klein werden. Die Druckdifferenz sorgt darüber hinaus dafür, dass der Füllwerkstoff jedenfalls lokal zwischen die Stabilisierungsfasern gelangt. Es ergibt sich insofern auch ein sehr guter Verbund der Stabilisierungsfasern selbst. Der Füllwerkstoff, der insbesondere flüssig eingebracht wird, kann beispielsweise bei Raumtemperatur selbstaushärtend sein.

Optional kann nach der Erfindung vorgesehen sein, dass eine Innenmantelfläche der Längsausnehmung nach dem Herstellen des Grundkörpers jedenfalls abschnittweise versiegelt wird. Beispielsweise erfolgt die Versiegelung, indem die Längsausnehmung oberflächenbeschichtet wird. Beispielsweise ein Werkstoff zur Herstellung der Versiegelung in die Längsausnehmung eingebracht werden und über die Innenmantelfläche dem Grundkörper jedenfalls lokal tränken beziehungsweise eindiffundieren zur Herstellung der Versiegelung. Die Versiegelung dient insbesondere dazu, die Luftdichtheit der Längsausnehmung herzustellen beziehungsweise zu verbessern. Ferner dient die Versiegelung als Grundierung zur besseren Haftvermittlung zwischen dem Grundwerkstoff und dem Füllwerkstoff.

Nach einer Weiterbildung der Erfindung wird der Füllstoffwerkstoff im erwärmten Zustand in die Längsausnehmung eingebraucht. Abhängig von den Eigenschaften des Füllwerkstoffs ergibt sich hierdurch beispielsweise eine bessere Fließfähigkeit, so dass der Füllvorgang beschleunigt und die Verfüllung optimiert werden. Für den Füllwerkstoff und den Grundkörper können beispielsweise gleichartige Materialien verwendet werden. Es können etwa Materialien aus der gleichen Werkstoffgruppe - beispielsweise ein SLS-Teil aus PA und ein Füllwerkstoff aus PA - verwendet werden.

Nach einer Weiterbildung der Erfindung können der Füllwerkstoff und die Stabilisierungsfasern gleichzeitig in die Längsausnehmung eingebracht werden. Dies kann beispielsweise über getrennt Zugangsöffnungen erfolgen. Beispielsweise können die Stabilisierungsfasern und der Füllwerkstoff vor dem Einbringen in die Längsausnehmung gemischt und dann gemeinsam über die gleiche Zugangsöffnung in die Längsausnehmung eingebracht werden. Es kann insofern beispielsweise eine thermoplastische Verbundmatrix mit Kurzfasern in die Längsausnehmung eingespritzt werden.

Nach einer Weiterbildung der Erfindung kann der Füllwerkstoff bei Zufuhr von Wärme beziehungsweise bei UV-Bestrahlung aushärten. Vorteilhaft wird hier durch das Zuführen von Hilfsenergie der Prozess des Aushärtens gezielt eingeleitet und kann zeitlich gesteuert werden. Es kann insofern auf die Art und Form des hergestellten Verbunds verfahrenstechnisch Einfluss genommen werden.

Nach dem Verfahren hergestellte Bauteile können beispielsweise eingesetzt werden, wenn komplexe Geometrien erforderlich sind, welche mit den üblichen Verbundanordnungen nicht umsetzbar sind, und wenn der erforderliche Grad der Individualisierung sehr hoch ist. Mögliche Anwendungen ergeben sich unter anderem in der Luftfahrt, der Medizintechnik, dem Fahrzeugbau, dem Vorrichtungs- und Sondermaschinenbau sowie im Sportbereich. Die Verbundanordnung ist hierbei durch ein hervorragendes Verhältnis von Festigkeit zu Gewicht gekennzeichnet. Sie kann in Bezug auf ihren Aufbau, die Festigkeit und die Geometrie sehr spezifisch auf den jeweiligen Einsatzzweck angepasst werden, indem insbesondere die Art, Anzahl und Orientierung der Fasern individuell gewählt wird und so lokal unterschiedlich Festigkeiten beziehungsweise mechanische Eigenschaften erzielt werden. Mit dem erfindungsgemäßen Verfahren lassen sich beispielsweise bei entsprechender Werkstoffauswahl und der Wahl eines angepassten Schichtaufbauverfahrens materialreine, partiell faserverstärkte Monocoque-Bauteile herstellen, indem zum Beispiel ein Stereolithografieteil mit einem Fasemerbundmaterial auf Epoxidharzbasis oder ein thermoplastisches Lasersinterteil mit einer stoffgleichen, im erwärmten Zustand eingebrachten Matrix kombiniert wird.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Erfindungsgemäß beschriebene Merkmale und Details der Verbundanordnung gelten selbstverständlich auch im Zusammenhang mit dem erfindungsgemäßen Verfahren und umgekehrt. So kann auf die Offenbarung zu den einzelnen Erfindungsaspekten stets wechselseitig Bezug genommen werden. Die Zeichnungen dienen lediglich beispielhaft der Klarstellung der Erfindung und haben keinen einschränkenden Charakter.

Ausführungsbeispiele der Erfindung werden nachfolgend anhand von Zeichnungen näher erläutert. Es zeigen:

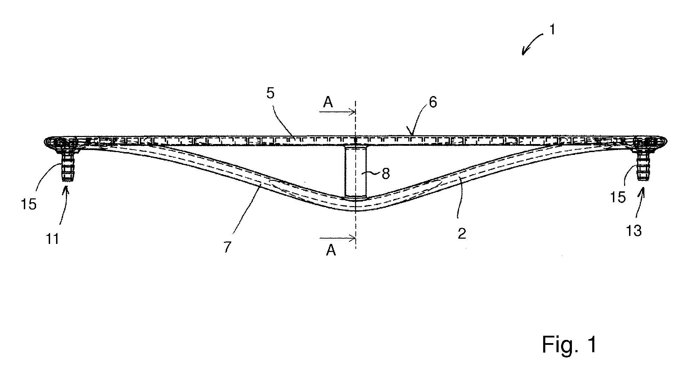

- Fig. 1: eine erfindungsgemäße Verbundanordnung in einer Seitenansicht,

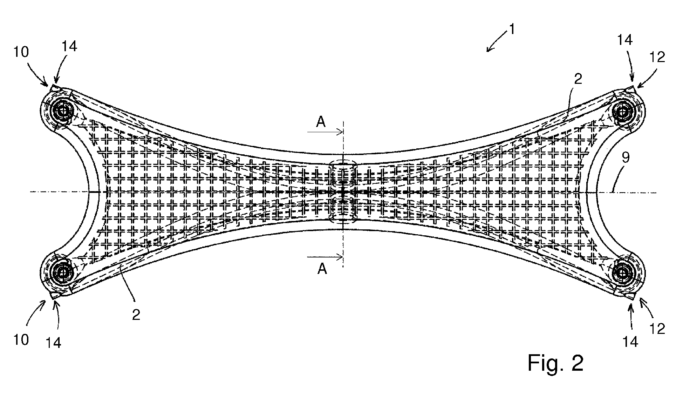

- Fig. 2: eine Aufsicht auf die erfindungsgemäße Verbundanordnung nach Fig. 1,

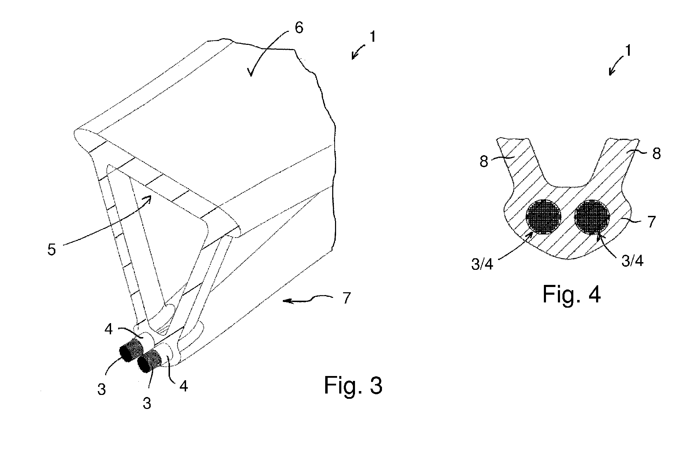

- Fig. 3: eine perspektivische Schnittdarstellung der erfindungsgemäßen Verbundanordnung nach Fig. 1 gemäß dem Schnitt A-A,
- Fig. 4: eine Detailansicht einer Schnittfläche nach Fig. 3 und

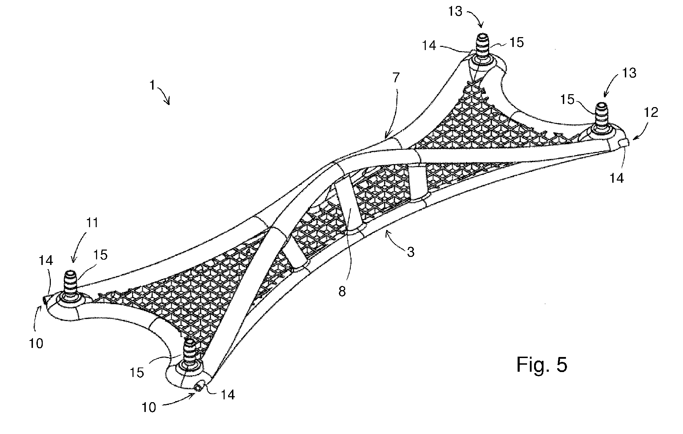

- Fig. 5: eine perspektivische Unterseitenansicht der erfindungsgemäßen Verbundanordnung nach Fig. 1.

Eine erfindungsgemäße Verbundanordnung umfasst als wesentliche Komponenten einen in Brückenform ausgeführten formgebenden Grundkörper 1 mit zwei Längsausnehmungen 2, welche sich zwischen zwei gegenüberliegenden schmalen Stirnseiten des Grundkörpers 1 erstrecken, in der Längsausnehmung 2 vorgesehene Stabilisierungsfasern 3 und einen Füllwerkstoff 4. Der Füllwerkstoff 4 dient der Verbindung der Stabilisierungsfasern 3 mit dem Grundkörper 1 und ist ebenfalls in der Längsausnehmung 2 vorgesehen. Der Grundkörper 1 weist einen Funktionsabschnitt 5 mit einer im Wesentlichen ebenen Funktionsfläche 6 sowie einen belastungsgerecht geformten Stützabschnitt 7 auf, der dem Funktionsabschnitt 5 auf einer der Funktionsfläche 6 abgewandten Unterseite zugeordnet ist. Die Längsausnehmung 2 ist in dem Stützabschnitt 7 vorgesehen. Zwischen dem Funktionsabschnitt 5 und dem Stützabschnitt 7 sind Streben 8 vorgesehen zum Verbinden der Abschnitte 5, 7.

Die Verbundanordnung ist symmetrisch in Bezug auf eine Längsmittelachse 9 ausgebildet, wobei je eine Längsausnehmung 2 auf beiden Seiten der Längsmittelachse 9 vorgesehen ist. Jede Längsausnehmung 2 verfügt über insgesamt vier Zugangsöffnungen 10, 11, 12, 13, welche je paarweise zwei gegenüberliegenden Endbereichen der Längsausnehmung 2 zugeordnet sind. In einem ersten Endbereich der Längsausnehmung 2 ist eine sich in Richtung der Längsausnehmung 2 erstreckende erste Zugangsöffnung 10 vorgesehen. Die erste Zugangsöffnung 10 ist als Teil eines an dem Grundkörper 1 vorgesehenen, rohrförmigen Anschlussstutzens 14 realisiert, wobei der Anschlussstutzen 14 sich in die Richtung der Längsausnehmung 2 erstreckt. Eine zweite Zugangsöffnung 11, die ebenfalls dem ersten Endbereich der Längsausnehmung 2 zugeordnet ist, erstreckt sich senkrecht zu der Funktionsfläche 6 des Grundkörpers 1 in Richtung der Unterseite des Grundkörpers 1. Die zweite Zugangsöffnung 11 ist Teil eines weiteren Anschlussstutzens 15, welcher im Bereich einer äußeren Mantelfläche kreissegmentförmig profiliert ausgebildet ist. Eine dritte Zugangsöffnung 12 im Bereich eines gegenüberliegenden zweiten Endbereichs der Längsausnehmung 2 ist analog zur ersten Zugangsöffnung 10 als Teil eines Anschlussstutzens 14 und eine vierte Zugangsöffnung 13 als Teil eines weiteren Anschlussstutzens 15 realisiert.

Zur Herstellung der Verbundanordnung wird in einem ersten Herstellschritt der Grundkörper 1 über ein Schichtaufbauverfahren aus einem fluidischen beziehungsweise granularen Grundwerkstoff hergestellt, indem lokal Energie zugeführt wird und sich der fluidische, plastifizierte beziehungsweise granuläre Grundwerkstoff lokal verfestigt. Während der Herstellung des Grundkörpers 1 wird verfahrensimmanent die Längsausnehmung 2 hergestellt, indem auf eine Verfestigung des Grundwerkstoffs lokal im Bereich der Längsausnehmung 2 verzichtet wird. Im Anschluss an die Herstellung des Grundkörpers 1 wird der in der Längsausnehmung 2 vorgesehene, nicht verfestigte Grundwerkstoff über die an der Längsausnehmung 2 vorgesehenen Zugangsöffnungen 10, 11, 12, 13 entfernt. Es werden dann die Stabilisierungsfasern 3 über die Zugangsöffnungen 10, 11, 12, 13 in die Längsausnehmung 2 eingebracht. Weiter wird ein Restvolumen der Längsausnehmung 2, welches nicht mit den Stabilisierungsfasern 3 gefüllt ist, jedenfalls teilweise mit einem Füllwerkstoff 4 verfüllt. Um den Füllwerkstoff 4 zuverlässig in die Längsausnehmung einbringen zu können und die Verteilung des Füllwerkstoffs 4 in der Längsausnehmung 2 zu begünstigen, wird in der Längsausnehmung 2 ein Unterdruck hergestellt. Zu diesem Zweck werden nach dem vorliegenden Ausführungsbeispiel der Erfindung die erste und dritte Zugangsöffnung 10, 12 mit einem Verschlussstopfen (nicht dargestellt) luftdicht verschlossen. An die zweite Zugangsöffnung 11 wird eine Vakuum- beziehungsweise Unterdruckpumpe angeschlossen. Über die verbleibende vierte Zugangsöffnung 13 wird dann der Füllwerkstoff 4 in die Längsausnehmung 2 eingebracht. Sobald eine ausreichende Menge des Füllwerkstoffs 4 in der Längsausnehmung 2 vorgesehen ist, kann der Füllwerkstoff 4 verfestigt werden. Beispielsweise wird die Verfestigung durch eine UV-Bestrahlung oder die Zuführung von Wärme bewirkt.

Da der Füllwerkstoff 4 die dauerhafte Verbindung der Stabilisierungsfasern 3 mit dem Grundkörper 1 bewirkt, ist ein möglichst hoher Befüllungsgrad des Restvolumens der Längsausnehmung 2 mit dem Füllwerkstoff 4 von Vorteil. Beispielsweise verbleibt nach dem Aushärten des Füllwerkstoffs 4 ein Restvolumen von weniger als 85 %, bevorzugt ein Restvolumen von weniger als 70 % und besonders bevorzugt ein Restvolumen von weniger als 50 % der Längsausnehmung 2, welches weder mit den Stabilisierungsfasern 3 noch mit dem Füllwerkstoff 4 gefüllt ist. Unberücksichtigt bleibt hierbei ein funktionales Schadvolumen, welches durch die Zugangsöffnungen 10, 11, 12, 13 beziehungsweise die Anschlussstutzen 14, 15 gebildet ist.

Gleiche Bauteile und Bauteilfunktionen sind durch gleiche Bezugszeichen gekennzeichnet.

## Patentansprüche

1. Verbundanordnung umfassend
- einen werkzeuglos im Wege des Rapid Prototyping hergestellten Grundkörper (1) als formgebende Komponente der Verbundanordnung mit wenigstens einer Längsausnehmung (2), welche über wenigstens zwei und bevorzugt drei oder mehr Zugangsöffnungen (10, 11, 12, 13) verfügt,
- eine Vielzahl von langgestreckt ausgebildeten Stabilisierungsfasern (3), welche in der Längsausnehmung (2) des Grundkörpers (1) vorgesehen sind und eine höhere Zugfestigkeit aufweisen als der Kunststoffwerkstoff des Grundkörpers (1), und
- einen Füllwerkstoff (4), welcher wie die Stabilisierungsfasern (3) in der Längsausnehmung (2) des formgebenden Grundkörpers (1) vorgesehen ist und zur dauerhaften Festlegung der Stabilisierungsfasern (3) in der Längsausnehmung (2) mit dem Grundkörper (1) einerseits und den Stabilisierungsfasern (3) andererseits verbunden ist.

2. Verbundanordnung nach Anspruch 1, **dadurch gekennzeichnet, dass** in einem ersten Endbereich der Längsausnehmung (2) mindestens eine erste Zugangsöffnung (10) und benachbart hierzu eine zweite Zugangsöffnung (11) vorgesehen sind und dass mindestens eine dritte Zugangsöffnung (12) in einem gegenüberliegenden zweiten Endbereich der Längsausnehmung (2) vorgesehen ist.

3. Verbundanordnung nach Anspruch 1 oder 2, **dadurch gekennzeichnet, dass** der Füllwerkstoff (4) thermoplaster oder duroplaster Art ist und/oder dass der Füllwerkstoff (4) in einem ausgehärteten Zustand formstabil ist.

4. Verbundanordnung nach einem der Ansprüche 1 bis 3, **dadurch gekennzeichnet, dass** der Grundkörper (1) beanspruchungsgerecht gestaltet ist derart, dass die mit den Stabilisierungsfasern (3) und dem Füllwerkstoff (4) gefüllte Längsausnehmung (2) im Bereich einer maximalen Scher- und/oder Zug- und/oder Biegebelastung vorgesehen ist.

5. Verbundanordnung nach einem der Ansprüche 1 bis 4, **dadurch gekennzeichnet, dass** als Bestandteil des Grundkörpers (1) wenigstens ein Anschlussstutzen (14, 15) mit jedenfalls abschnittsweise rohrförmiger Geometrie vorgesehen ist und dass der Anschlussstutzen (14, 15) eine Zugangsöffnung (10, 11, 12, 13) für die Längsausnehmung (2) aufweist.

6. Verbundanordnung nach einem der Ansprüche 1 bis 5, **dadurch gekennzeichnet, dass** ein Verschlussstopfen für wenigstens eine Zugangsöffnung (10, 11, 12, 13) vorgesehen ist, wobei eine Geometrie des Verschlussstopfens so auf eine Geometrie der Zugangsöffnung (10, 11, 12, 13) abgestimmt ist und/oder ein Werkstoff für den Verschlussstopfen so gewählt ist, dass die Zugangsöffnung (10, 11, 12, 13) mit dem Verschlussstopfen luftdicht verschlossen ist.

7. Herstellverfahren für eine Verbundanordnung nach einem der Ansprüche 1 bis 6 umfassend die folgenden Verfahrensschritte:
- additives Herstellen des formgebenden Grundkörpers (1) mit der wenigstens einen hierin vorgesehenen Längsausnehmung (2) und der Mehrzahl an Zugangsöffnungen (10, 11, 12, 13) in einem Schichtaufbauverfahren zu einem fluidischen und/oder granularen und/oder plastifizierten Grundwerkstoff, indem lokal Energie zugeführt wird und/oder der fluidische und/oder granuläre und/oder plastifizierte Grundwerkstoff aushärtet;
- Entfernen von nicht verfestigtem Grundwerkstoff aus der Längsausnehmung (2) des Grundkörpers (1), wobei der nicht verfestigte Grundwerkstoff durch wenigstens eine Zugangsöffnung (10, 11, 12, 13) entnommen wird;
- Einbringen der Stabilisierungsfasern (3) in die Längsausnehmung (2), wobei die Stabilisierungsfasern (3) durch die Zugangsöffnung (10, 11, 12, 13) eingeführt werden;
- Positionieren der Stabilisierungsfasern (3) in der Längsausnehmung (2);
- Herstellen einer Druckdifferenz zwischen einem Druck in der Längsausnehmung (2) und einem Umgebungsdruck;
- wenigstens teilweises Verfüllen eines Restvolumens der Längsausnehmung (2) mit dem Füllwerkstoff (4);
- Verfestigung des Füllwerkstoffs (4).

8. Herstellverfahren nach Anspruch 7, **dadurch gekennzeichnet, dass** der Füllwerkstoff (4) durch die Zuführung von Wärme verfestigt wird und/oder dass der Füllwerkstoff (4) mit UV-Strahlung beaufschlagt wird zum Verfestigen desselben.

9. Herstellverfahren nach Anspruch 7 oder 8, **dadurch gekennzeichnet, dass** unmittelbar vor dem jedenfalls teilweisen Verfüllen des Restvolumens mit dem Füllwerkstoff (4) in der Längsausnehmung (2) ein Unterdruck hergestellt wird, indem in der Längsausnehmung (2) vorhandene Luft über eine Zugangsöffnung (10, 11, 12, 13) abgesaugt wird.

10. Herstellverfahren nach einem der Ansprüche 7 bis 9, **dadurch gekennzeichnet, dass** zum wenigstens teilweisen Verfüllen des Restvolumens der Längsausnehmung (2) mit dem Füllwerkstoff (4) jedenfalls einzelne Zugangsöffnungen (10, 11, 12, 13) verschlossen werden.

11. Herstellverfahren nach einem der Ansprüche 7 bis 10, **dadurch gekennzeichnet, dass** eine Innenmantelfläche der Längsausnehmung (2) nach dem Herstellen des Grundkörpers (1) jedenfalls teilweise versiegelt wird.

12. Herstellverfahren nach einem der Ansprüche 7 bis 11, **dadurch gekennzeichnet, dass** der Füllwerkstoff (4) in einem erwärmten Zustand in die Längsausnehmung (2) eingebracht wird.

13. Herstellverfahren nach einem der Ansprüche 7 bis 12, **dadurch gekennzeichnet, dass** der Füllstoff (4) und der Grundkörper (1) aus einem gleichartigen Material sind.

14. Herstellverfahren nach einem der Ansprüche 7 bis 13, **dadurch gekennzeichnet, dass** die Stabilisierungsfasern (3) und der Füllstoff (4) gleichzeitig in die Längsausnehmung (2) eingebracht werden.

15. Herstellverfahren nach einem der Ansprüche 7 bis 14, **dadurch gekennzeichnet, dass** die Stabilisierungsfasern (3) und der Füllstoff (4) außerhalb der Längsausnehmung (2) gemischt und dann in die Längsausnehmung (2) eingebracht werden.
